(19) Europäisches Patentamt
European Patent Office
Office européen des brevets

(11) **EP 1 932 016 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: **06764331.2**

(22) Anmeldetag: **15.08.2006**

(51) Int Cl.:
***G01S 13/93*** *(2006.01)*

(86) Internationale Anmeldenummer:
**PCT/EP2006/065298**

(87) Internationale Veröffentlichungsnummer:
**WO 2007/036390 (05.04.2007 Gazette 2007/14)**

(54) **VERFAHREN UND VORRICHTUNG ZUR STEUERUNG MINDESTENS EINES OBJEKTDETEKTIONSSENSORS**

METHOD AND DEVICE FOR CONTROLLING AT LEAST ONE OBJECT DETECTION SENSOR

PROCEDE ET DISPOSITIF POUR COMMANDER AU MOINS UN CAPTEUR DE DETECTION D'OBJET

(84) Benannte Vertragsstaaten:
**DE FR GB**

(30) Priorität: **27.09.2005 DE 102005046045**

(43) Veröffentlichungstag der Anmeldung:
**18.06.2008 Patentblatt 2008/25**

(73) Patentinhaber: **ROBERT BOSCH GMBH**
**70442 Stuttgart (DE)**

(72) Erfinder:
• **LEHRE, Klaus**
**76316 Malsch (DE)**
• **RANDLER, Martin**
**88090 Immenstaad (DE)**
• **KOESTERS, Iris-Nadine**
**71229 Leonberg (DE)**

(56) Entgegenhaltungen:
**DE-A1- 10 147 443      DE-A1- 10 360 890**

EP 1 932 016 B1

**Beschreibung**

Die vorliegende Erfindung betrifft ein Verfahren und eine Vorrichtung zur Steuerung mindestens eines Objektdetektionssensors für ein Kraftfahrzeug, wobei der mindestens eine Sensor zwischen mehreren Betriebsmodi umschaltbar ist, wobei mehrere Fahrerassistenzfunktionen zur Auswertung der mittels des Objektdetektionssensors detektierten Objekte wahlfrei auf den mindestens einen Sensor zugreifen können und eine Umschaltung zwischen den Betriebsmodi in Abhängigkeit der momentan zugreifenden Assistenzfunktion ausgewählt wird, und dass zwischen den Funktionsauswerlungseinrichtungen und dem mindestens einen Sensor ein Koordinator vorgesehen ist, der jede auf den mindestens einen Sensor zugreifende Fahrerassistenzfunktion dem Koordinator jeweils eine Wichtigkeitsdichtefunktion übermittelt, und dass der mindestens eine Sensor für jeden aktivierbaren Messmodus dem Koordinator eine Detektionswahrscheinlichkeitsdichtefunktion übermittelt und der Koordinator für jede, auf den mindestens einen Sensor zugreifende Assistenzfunktion, den geeigneten Betriebsmodus auswählt.

Stand der Technik

Aus der DE 199 34 670 A1 ist ein Objektdetektionssystem, insbesondere für ein Kraftfahrzeug, bekannt, wobei das Objektdetektionssystem aus einer Kombination von wenigstens drei Objektdetektoren besteht, die jeweils einen anderen Detektionsbereich und/ oder eine andere Detekhonsreichweite aufweisen. Aus der DE 101 47 443 A1 ist ein Verfahren zur Steuerung eines Objektdetektionssensors für ein Kraftfahrzeug bekannt, wobei die Sensoren zwischen mehreren Betriebsmodi umschaltbar sind.

Objektdetektionssysteme für Kraftfahrzeuge weisen häufig eine Mehrzahl unterschiedlicher Sensorsysteme auf, die unterschiedliche Erfassungsbereiche abdecken, oder weisen einen Sensor auf, der in verschiedenen Betriebsmodi mit unterschiedlichen Erfassungsbereichen betrieben werden kann. Durch die wachsende Anzahl an Fahrerassistenzsystemen im Kraftfahrzeug werden die von den Objektdetektionssensoren ermittelten Objektdaten bezüglich vorherfahrender Fahrzeuge und vorausbefindlicher stehender Objekte von unterschiedlichen Fahrerassistenzfunküonen benützt, wobei diese jeweiligen Funktionen Objekte in unterschiedlichen Sensorerfassungsbereichen auswerten. Derartige Systeme nehmen in ihrer Komplexität exponentiell zu, da die Funktionen und die Sensoren jeweils aufeinander abgestimmt werden müssen, so dass die jeweiligen Fahrerassistenzfunktionen nur die Objekte im Erfassungsbereich des Sensors verarbeiten, die für ihre Funktionalität notwendig sind und dabei den Objektdetektionssensor in seinen Betriebsmoden umschalten müssen.

Kern und Vorteile der Erfindung

Der Kern der vorliegenden Erfindung ist es, ein Verfahren und eine Vorrichtung anzugeben, die so ausgestaltet sind, dass ein Objektdetektionssensor lediglich seine unterschiedlichen Betriebsmodi kennen muss mit den entsprechenden statistischen Verteilungsfunktionen der zu erwartenden Objektdetektionspositionen sowie die entsprechende Fahrerassistenzfunktionen lediglich die Teilbereiche des Sensorerfassungsbereichs kennen müssen, in denen die Objekte zu detektieren sind, die für ihre jeweilige Funktionalität relevant sind. Erfindungsgemäß wird dieses gelöst, indem ein Koordinator vorgesehen ist, der einerseits vom Objektdetektionssensor für seine jeweiligen Betriebsmodi die Bereiche zu Verfügung stellt, in denen statistisch zu detektierende Objekte zu erwarten sind und andererseits die Fahrerassistenzfunktionen dem Koordinator mitteilen, in welchem Sensorerfassungsbereichsteilen die für ihre Funktionalität erforderlichen Objekte zu detektieren sind. Dieses kann vom Koordinator derart gelöst werden, dass dieser die jeweiligen Verteilungsdichtefunktionen miteinander korreliert und somit für jede Fahrerassistenzfunktion den geeignetsten Betriebsmodus des Objektdetektionssensors bestimmt und entsprechend der momentan aktivierten Fahrerassistenzfunktion den Objektdetektionssensor entsprechend zwischen seinem Betriebsmodi umschaltet.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise gibt die Wichtigkeitsdichtefunktion an, in welchem Teilbereich des Sensorerfassungsbereichs für die jeweilige Funktion besonders relevante Objekte auszuwerten sind, indem die Funktion die Wichtigkeitsdichte in Abhängigkeit des Abstands und/oder des Azimutwinkels des Sensorerfassungsbereichs angibt. Hierbei kann dich Wichtigkeitsdichtefunktion w entweder eindimensional sein, indem lediglich der Abstand der detektierten Objekte ausgewertet wird oder eine zweidimensionale Verteilungsfunktion sein, die sowohl den Abstand als auch den Azimutwinkel des detektierten Objektes auswertet. Die Wichtigkeitsdichtefunktion ist damit definiert als die Aufmerksamkeitsanforderung der Fahrerassistenzfunktion in einer sensorunabhängigen Sprache. In anderen Worten gibt die Wichtigkeitsdichtefunktion an, in welchem Abstand und/oder in welchem Azimutwinkel $\varphi$ sich die zu detektierenden Objekte aufhalten, die für diese spezielle Fahrerassistenzfunktion relevant sind Beispielsweise ist es bei einer automatischen Notbremsfunktion wichtig, besonders die Objekte zu erkennen, die im nahen Fahrzeugumfeld vorhanden sind, um eventuell eine Kollisionsgefahr erkennen zu können. Weiter entfernte Objekte, auf die der Fahrer oder eine Fahrerassistenzfunktion noch rechtzeitig reagieren kann sind für biespeilhaft betrachtete Notbremsfunktion unrelevant. Vorteilhafterweise ist die Wichtigkeitsdichtefunktion in Anlehnung an statistische Verteilungsdichtefunktionen so normiert, dass

$$\int_d w(d) \cdot \partial d = 1 \quad bzw. \quad \int_d \int_\varphi w(d, \varphi) \cdot \partial\varphi \partial d = 1$$

ist. Das heißt das Integral der Wichtigkeitsdichtefunktion über den Abstand und aufintegriert gleich 1 ergibt bzw. das Integral der Wichtigkeitsdichtefunktion über den Abstand und den Azimutwinkel aufintegriert gleich 1 ergibt, um jeweils eine dimensionslose Größe zu erhalten bzw.

Weiterhin ist es vorteilhaft, dass die Detektionswahrscheinlichkeitsdichtefunktion angibt, in welchem Teilbereich des Sensorerfassungsbereichs Objekte aufgrund des ausgewählten Betriebsmoduses besonders gut detektierbar sind, indem die Funktion die Detektionswahrscheinlichkeitsdichte in Abhängigkeit des Abstands und/ oder des Azimutwinkels des Sensorerfassungsbereichs angibt. Die Detektionswahrscheinlichkeitsdichtefunktion ist demnach so definiert, dass diese die Information des Sensors bezüglich seiner unterschiedlichen Betriebsmodi angibt, je nachdem in welcher Betriebsart welcher Sensorerfassungsbereich besonders abgedeckt wird oder in welchem Sensorerfassungsbereich eine besondere Auflösungsgenauigkeit vorhanden ist. In anderen Worten gibt die Detektionswahrscheinlichkeitsdichtefunktion an, wo der jeweilige Betriebsmodus besonders gut Objekte erkennen kann bzw. in welchem Sensorerfassungsbereich statistisch die meisten Objekte zu erwarten sind. Auch die Detektionswahrscheinlichkeitsdichtefunktion v kann wahlweise als eindimensionale Größe ausgeführt sein, die lediglich den Abstand der erkannten Objekte auswertet oder alternativ als zweidimensionale Größe ausgerührt sein, die sowohl den Abstand d als auch den Azimutwinkel $\varphi$ der erkannten Objekte berücksichtigt. Auch die Detektionswahrscheinlichkeitsdichtefunktion ist in Anlehnung an statistische Verteilungsdichtefunktionen so normiert, dass

$$\int_d v(d) \cdot \partial d = 1 \quad bzw. \quad \int_d \int_\varphi v(d, \varphi) \cdot \partial\varphi \partial d = 1$$

ist. Wird also die Detektionswahrscheinlichkeitsdichtefunktion v über den Abstand d aufintegriert, so ist die Integralsumme gleich 1 gesetzt, bzw. die Detektionswahrscheinlichkeitsdichtefunktion v über den Abstand d und über den Azimutwinkel $\varphi$ aufintegriert, so ist die Integralsumme gleich 1 gesetzt, so dass die Detektionswahrscheinlichkeitsdichtefunktion eine dimensionslose Größe ist, um später mit der Wichtigkeitsdichtefunktion w korreliert werden zu können.

Weiterhin ist es vorteilhaft dass der mindestens eine Objektdetektionssensor mehrere Sensoren sind, die in unterschiedlichen Sensorarten ausgeführt sind.

Weiterhin ist es vorteilhaft, dass die unterschiedlichen Sensorarten Ultraschallsensoren, Pulsradarsensoren, frequenzmodulierte Dauerstrich (FMCW)-Radarsensoren, Lidarsensoren und/ oder Videosensoren sind. Es kann auch vorgesehen sein, dass ein Sensor so ausgeführt ist, dass er zwischen einem Pulsradarbetrieb und einem frequenzmodulierten Dauerstrichbetrieb umgeschaltet werden kann, sodass die unterschiedlichen Betriebsmodi in diesem Fall der Pulsradarmodus sowie der frequenzmodulierte Dauerstrichmodus wären.

Vorteilhafterweise weisen die mehreren Betriebsmodi des mindestens einen Sensors unterschiedliche Erfassungsbereiche und/oder unterschiedliche Modulationsarten des Sensors und/oder unterschiedliche Auflösungsgenauigkeiten auf.

Besonders vorteilhaft ist es, dass die mehreren Funktionen eine oder eine beliebige Kombination der nachfolgend aufgeführten Fahrerassistenzfunktionen sind. Als mögliche Fahrerassistenzfunktionen sind

- eine adaptive Abstands- und Geschwindigkeitsregelfunktion für autobahnähnlich ausgebaute Landstraßen und Autobahnen, auch als LangRange-Adaptive-Cruise-Control (LR-ACC) bezeichnet,
- eine Stop & Go-fähige, adaptive Abstands- und Geschwindigkeitsregelfunktion für den Stadtverkehr, die auch als ShortRange-Adaptive-Cruise-Control (SR-ACC) bezeichnet wird,
- eine automatisch auslösende Notbremsfunktion (NBF), die eine unmittelbar bevorstehende Kollision des eigenen Fahrzeugs mit einem weiteren Fahrzeug vermeiden oder in ihrer Stärke mindern soll,
- eine Funktion, die eine Kollisionssituation erkennt und den Fahrer warnt oder die Auslöseschwelle eines Bremsassistenten verändert,
- eine Spurhaltefunktion,
- eine Spurverlassenswarnungsfunktion und/oder
- eine Einparkhilfe

vorgesehen ist.

Weiterhin ist es vorteilhaft, dass der Koordinator die mittels des wenigstens einen Sensors gewonnenen Objektdaten der Fahrerassistenzfunktion zur Auswertung zuführt, in deren Abhängigkeit der entsprechende Betriebsmodus gewählt wurde. Diese Funktionalität stellt sicher, dass der Koordinator der Fahrerassistenzfunktion die momentan ermittelten Objektdaten zuführt, die den Sensor veranlasst hat, in dem gerade aktivierten Messmodus umzuschalten.

Weiterhin ist es vorteilhaft, dass die Auswahl des zu aktivierenden Betriebsmoduses des wenigstens einen Sensors durch den Koordinator durch Korrelation aus der Wichtigkeitsdichtefunktion w mit der Detektionswahrscheinlichkeitsdichtefunktion v erfolgt.

Weiterhin ist es vorteilhaft das zusätzliche Assistenzfunktionen aktivierbar sind und neben den aktiven Funktionen auf den wenigstens einen Sensor zugreifen können, ohne den Koordinator und/oder den Sensor bezüglich der zusätzlichen Fahrerasssistenzfunktion konfigurieren zu müssen.

Weiterhin ist es vorteilhaft, dass im Koordinator eine Einrichtung zur Korrelationsauswertung vorgesehen ist.

Von besonderer Bedeutung ist die Realisierung des erfindungsgemäßen Verfahrens in Form eines Steuerelements, das für ein Steuergerät einer Fahrerassistenzfunktion eines Kraftfahrzeugs oder für ein Steuergerät eines Sensors eines Kraftfahrzeugs vorgesehen ist. Dabei ist auf dem Steuerelement eine Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

Zeichnungen

Nachfolgend werden Ausführungsbeispiele der Erfindung anhand der Zeichnung erläutert. Es zeigen

Figur 1        ein schematisches Blockschaltbild eine Ausführungsform der erfindungsgemäßen Vorrichtung,
Figur 2        ein Wichtigkeitsdichtefunktionsdiagramm einer ersten und einer zweiten Fahrerassistenzfunktion,
Figur 3a, 3b    jeweils ein Detektionswahrscheinlichkeitsdichtefunktionsdiagramm eines ersten und eines zweiten Betriebsmoduses des Sensors und
Figur 4        ein Ablaufdiagramm eine Ausführungsform des erfindungsgemäßen Verfahrens.

Beschreibung von Ausführungsbeispielen

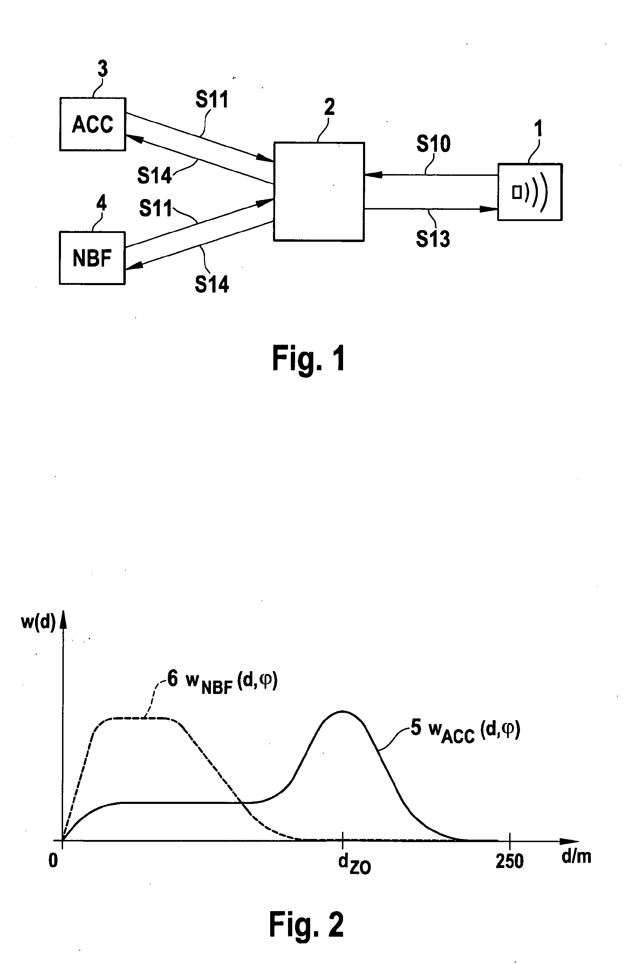

In Figur 1 ist ein schematisches Blockschaltbild der erfindungsgemäßen Vorrichtung dargestellt. Zu erkennen ist ein Objektdetektionssensor 1, der beispielsweise als Radarsensor ausgeführt sein kann und über zwei Betriebsmodi verfügt, wobei ein erster Betriebsmodus A eine große Reichweite aufweist und ein zweiter Betriebsmodus B eine geringere Reichweite aufweist, die jedoch über eine höhere Auflösungsgenauigkeit verfügt und in kürzeren Messzyklen die Objekipositionen der erkannten Objekte ermittelt, als der Betriebsmodus A. Weiterhin ist ein Koordinator 2 dargestellt, der den Objektdetektionssensor 1 mit mehreren Fahrerassistenzfunktionen verknüpft. Als Fahrerassistenzfunktionen sind exemplarisch zwei Funktionen aufgeführt, wobei die erste Fahrerassistenzfunktion 3 eine ACC- Funktion die auf autobahnähnlichen Landstraßen oder Autobahnen eine Abstandsregelung durchführt, um hinter einem als Zielobjekt erkannten vorherfahrenden Fahrzeug die Geschwindigkeit des eigenen Fahrzeugs im Sinne einer Abstandskonstantregelung zu regeln. Als weitere exemplarisch betrachtete Fahrerassistenzfunktion 4 ist eine automatiosch auslösbare Notbremsfunktion dargestellt, die in Abhängigkeit der vorausbefmdlichen detektierten Objekte ermittelt, ob eine Kollision des eigenen Fahrzeugs mit einem der detektierten Objekte wahrscheinlich ist und im Fall, dass eine Kollision nicht mehr vermeidbar ist, eine automatisch ausgelöste und durchgeführte Notbremsung durchführt. Als Fahrerassistenzfunktionen 3, 4 sind jedoch auch beliebig andere Fahrerassistenzfunktionen möglich, die mittels Umfelderfassungssensoren Objekte im Fahrzeugumfeld erkennen und Fahrerassistenzfunktionen in Abhängigkeit der erkannten Sensordaten Fahrerwarnungen oder Eingriffe in den Triebstrang oder die Verzögerungseinrichtungen des Fahrzeugs durchführen. Der Objektdetektionssensor 1 ist weiterhin in der Lage, wie durch Pfeil S10 angedeutet, dem Koordinator 2 für jeden möglichen Betriebsmodus, den der Objektdetektionssensor 1 aktivieren kann, eine Detektionswahrscheinlichkeitsdichtefunktion $v_i$ $(d,\varphi)$ zu übermitteln Die Fahrerassistenzfunktionen 3,4 sind ebenfalls gemäß der Pfeile S 11 in der Lage dem Koordinator 2 jeweils eine Wichtigkeitsdichtefunktion $w_i(d,\varphi)$ zu übermitteln. Der Koordinator 2 korreliert jede, ihm vorliegende

Detektionswahrscheinlichkeitsdichtefunktion $v_i$ mit jeder vorliegenden Wichtigkeitsdichtefunktion $w_i$ und bestimmt für jede angeschlossene Fahrerassistenzfunktion 3, 4 die Kombination mit dem größten Korrelationsergebnis. Da der Objektdetektionssensor 1 in den meisten Fällen zu einem Zeitpunkt nur in einem Betriebsmodus betreibbar ist, teilt der Koordinator 2 dem Objektdetektionssensor 1 daraufhin mit, dargestellt durch den Pfeil S13, welcher Betriebsmodus des Sensors 1 für welche Fahrerassistenzfunktion 3, 4 am geeignetsten ist beziehungsweise welcher Betriebsmodus am dringlichsten ist. So wird beispielsweise kurz vor eienr unvermeidbaren Kollision der Betriebsmodus ausgewählt, der für die Notbremsfunktion (NBF) am günstigsten ist, während im Normalbetrieb beispielsweise ein ständiges Umschalten zwischen Betriebsmodi denkbar ist. Der Objektdetektionssensor 1 sendet daraufhin die in den jeweiligen Betriebsmodi gewonnenen Objektdaten dem Koordinator 2 mit, der diese an die entsprechende Fahrerassistenzfunktion 3 oder 4 zur weiteren Auswertung weitergibt. Hieraus ergibt sich, dass während dem Betrieb zusätzliche Fahrerassistenzfunktionen aktiviert werden können ohne dass der Sensor 1 vorab auf die jeweils neu aktivierte Fahrerassistenzfunktion konfiguriert werden muss bzw. ohne dass der Sensor auf den für diese Fahrerassistenzfunktion besonders relevanten Detektionsbereich konfiguriert werden muß.

In Figur 2 sind Wichtigkeitsdichtefunktionen 5, 6 in Abhängigkeit des Abstands d aufgetragen. Die in den Ausführungsbeispielen beschriebenen Funktionen sind aus Gründen der Verständlichkeit nur als eindimensionale Funktionen in Abhängigkeit von d dargestellt, jedoch können diese auch ohne weiteres als mehrdimensionale Funktionen in Abhängigkeit von beispielsweise d und φ ausgeführt sein. Die Fahrerassistenzfunktion 3, die eine ACC-Funktion ist, regelt die Fahrzeuggeschwindigkeit auf Autobahnen auf vorherfahrende Fahrzeuge, die üblicherweise in einen gewissen Folgeabstand $d_{ZO}$ vorausfahren, sodass die Wichtigkeitsdichtefunktion $w_{ACC}(d,φ]$ der ACC-Funktion, dargestellt durch die Kurve 5, im Bereich um den Zielobjektabstand $d_{ZO}$ eine erhöhte Wichtigkeitsdichte aufweist. Objekte, die dem eigenen Fahrzeug in einer Entfernung größer als dem Zielobjektabstand $d_{ZO}$ vorausfahren, sind für die ACC-Funktion 3 von untergeordneter Bedeutung, so dass die Wichtigkeitsdichtefunktion $w_{ACC}$ für Abstände $d > d_{ZO}$ gegen Null geht. Auch vorherfahrende Objekte die einen geringeren Abstand als den Zielobjektabstand $d_{ZO}$ aufweisen ($d < d_{ZO}$) sind für die Abstandsregelfunktion von untergeordneter Bedeutung, da diese im Autobähnbetrieb sehr selten vorkommen und für die Geschwindigkeitsregelfunktion zwar Auswirkungen haben, jedoch nicht der üblichen Regelsituation entsprechen. Daher weist die Wichtigkeitsdichtefunktion $w_{ACC}$ für Abstände $d < d_{ZO}$ eine kleine Wichtigkeitsdichte auf. Die Wichtigkeitsdichtefunktion $w_{ACC}(d,φ)$ wie sie durch Kurve 5 dargestellt ist, wird von der ACC- Funktion 3 gemäß dem Pfeil S11 an den Koordinator 2 weitergegeben. Analog hierzu ist in Form der Kurve 6 eine weitere Wichtigkeitsdichtefunktion $w_{NBF}(d,φ)$ aufgetragen, die von der Notbremsfunktion 4 gemäß dem Pfeil S11 in Figur 1 an den Koordinator 2 übermittelt wird. Die Notbremsfunktion hat die Aufgabe, festzustellen, ob eine Kollision mit einem vorausfahrenden Fahrzeug bevorsteht um eventuell eine automatische Notbremsung auszulösen und durchzuführen. Hierzu sind besonders Objekte mit einem geringen Abstand d relevant, da diese eine höhere Kollisionswahrscheinlichkeit besitzen als weit entfernte, vorausfahrende Objekte. Dementsprechend ist die Wichtigkeitsdichtefunktion $w_{NBF}(d,φ)$ so gestaltet, dass sie bei geringen Abständen d eine hohe Wichtigkeitsdichte aufweist und diese mit steigendem Abstand d abnimmt.

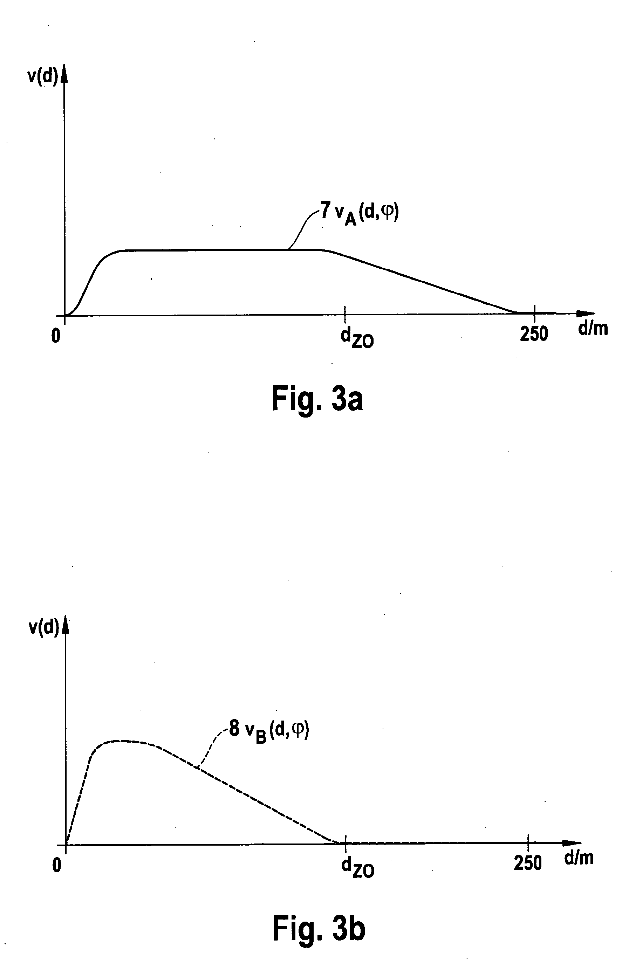

In den Figuren 3a und 3b sind für jeden Betriebsmodus des Objektdetektionssensor 1 Detektionswahrscheinlichkeitsdichtefunktionen $v_i(d,φ)$ dargestellt. Wie in Figur 1 bereits beschrieben, verfügt der Sensor 1 über einen Fernbereichsmodus A, der durch seine große Reichweite gekennzeichnet ist. Bezüglich dieses Fernbereichsmodus A ist in Figur 3a eine Detektionswahrscheinlichkeitsdichtefunktion $v_A(d,φ)$ gemäß Kurve 7 dargestellt. Diese Funktion stellt dar, in welchen Entfernungsbereichen im jeweiligen Betriebsmodus am ehesten mit zu detektierenden Objekten gerechnet werden muss. Demnach ist die Kurve 7 des Fernbereichsmodus A so gestaltet, dass diese bis zum Abstand $d = d_{ZO}$ etwa konstant verläuft und danach beispielsweise bis zur maximalen Reichweite des Sensors bei d = 250 Meter auf Null absinkt. Entsprechend ist in Figur 3b die Detektionswahrscheinlichkeitsdichtefunktion $v_B(d,φ)$ gemäß Kurve 8 aufgetragen, die aufgrund des Nahbereichsmessmoduses B besonders darauf eingestellt ist, im Nahbereich vor dem Fahrzeug also bei kleinen Abständen d zu detektierende Objekte zu erfassen. Diese beiden Detektionswahrscheinlichkeitsdichtefunktionen $v_A$ und $v_B$ werden vom Objektdetektionssensor 1 gemäß Pfeil S10 der Figur 1 an den Koordinator 2 weitergeleitet.

Der Koordinator 2 führt nun eine Korrelation aller ihm übermittelten Wichtigkeitsdichtefunktionen $w_i$ und aller im übermittelten Detekdonswahrscheinlichkeitsdichtefunktionen $v_i$ durch und ermittelt für jede Fahrerassistenzfunktion 3, 4 einen am ehesten geeigneten Messmodus A, B. Die vom Koordinator 2 durchzuführenden Korrelationen sind besipielshaft in nachfolgender Tabelle aufgetragen.

| | Messmodus A $v_A(d,φ)$ | Messmodus B $v_B(d,φ)$ | größter Korrelationskoeffizient r bei |
|---|---|---|---|
| ACC-Funktion $w_{ACC}(d,φ)$ | $r[w_{ACC}(d,φ); v_A(d,φ)] \approx 0,8$ | $r[w_{ACC}(d,φ); v_B(d,φ)] \approx 0,2$ | $\rightarrow r[ACC;A]$ |
| NBF-Funktion $v_{NBF}(d,φ)$ | $r[w_{NBF}(d,φ); v_A(d,φ)] \approx 0,3$ | $r[w_{NBF}(d,φ); v_B(d,φ)] \approx 0,7$ | $\rightarrow r[NBF;B]$ |

Der Koordinator 2 führt gemäß der ersten Zeile der Tabelle eine Korrelation der Wichtigkeitsdichtefunktion $W_{ACC}(d,\varphi)$ mit der Detektionswahrscheinlichkeitsdichtefunktion $V_A(d,\varphi)$ durch. Da die Kurve 5 der Figur 2 und die Kurve 7 der Figur 3a, die miteinander korreliert werden, bei gleichen Abständen quantitativ übereinstimmende Bereiche aufweisen, entsteht ein Korrelationskoeffizient r[ACC; A] von beispielsweise 0,8. Nachfolgend wird die Wichtigkeitsdichtefunktion $W_{ACC}$ mit der Detektionswahrscheinlichkeitsdichtefunktion $v_B$ gemäß Figur 3b korreliert, wobei beispielsweise ein Korrelationsergebnis r[ACC; B] von ungefähr 0,2 entsteht, da zwischen den Kurven 5 und 8 bei gleichen Abständen d Ungleichgewichte bestehen, was zu einer geringen Korrelation führt. Damit wurden für die Funktion 3, die beispielsweise als ACC-Funktion angenommen wurde, alle Betriebsmodi A, B mit der entsprechenden Wichtigkeitsdichtefunktion $w_{ACC}$ korreliert. Da der Korrelationskoeffizient r[ACC; A] größer ist als der Korrelationskoeffizient r[ACC; B] ist für die beispielhaft als Abstandsregelfunktion angenommene erste Funktion 3 der Betriebsmodus A des Objektdetektionssensor 1 besser geeignet als der Betriebsmodus B. Ebenso wird für die weitere Funktion 4, die Beispielhaft als Notbremsefunktion angenommen wurde, gemäß der Tabellenzeile "Notbremsfunktion" Korrelationen durchgeführt wobei als Korrelationskoeffizienten r[NBF;A] von beispielhaft 0,3 und r[NBF;B] von beispielsweise 0,7 ermittelt wurden. Damit ergibt sich für die zweite Funktion 4, dass der Betriebsmodus mit dem größten Korrelationskoeffizienten, in diesem Beispiel, also der Nahbereichsmodus B am geeignetsten ist, um für eine Notbremsfunktion relevante Objekte zu detektieren. Dieses Ergebnis gibt der Koordinator 2 gemäß dem Pfeil S13 in Figur 1 an den Objektdetektionssensor 1 aus, der daraufhin Messungen für die Abstandsregelfunktion 3 den Fernbereichsmodus A wählt und für Objektdetektionen für die Notbremsfunktion 4 den hierfür besser geeigneten Nahbereichsmodus B des Objektdetektionssensor 1 auswählt. Die vom Sensor 1 ermittelten Objektwerte werden dem Koordinator 2 weitergegeben der die Messwerte, je nach dem in welchem Betriebsmodus A, B dies ermittelt wurden an die entsprechenden Fahrerassistenzfunktionen 3, 4 zur Auswertung weitergibt.

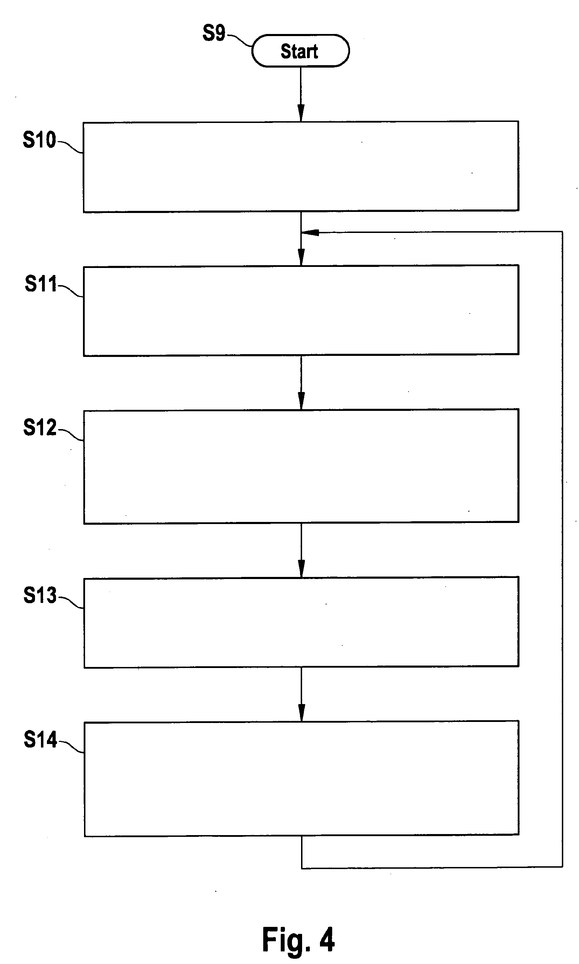

In Figur 4 ist ein schematisches Ablaufdiagramm des erfindungsgemäßen Verfahrens dargestellt, das im Schritt S9, beispielsweise bei Aktivierung einer Fahrerassistenzfunktion oder bei Einschalten der Zündung des Fahrzeugs beginnt. Hierauf folgt gemäß Schritt S10 dass der Sensor 1 dem Koordinator 2 für jeden von ihm betreibbaren Betriebsmodi A, B jeweils eine Detektionswahrscheinlichkeitsdichtefunktion $v_i(d,\varphi)$ übermittelt. Im folgenden Schritt S11 übermittelt jede aktive Fahrerassistenzfunktion 3, 4 jeweils eine Wichtigkeitsdichtefunktion $w_i(d,\varphi)$, die entsprechend ihrer Funktionalität in der jeweiligen Funktionsauswertungseinrichtung 3, 4 gespeichert ist. Im folgenden Schritt S 12 führt der Koordinator 2 alle möglichen Korrelationen zwischen Detektionswahrscheinlichkeitsdichtefunktionen $v_i(d,\varphi)$ und Wichtigkeitsdichtefunktionen $w_i(d,\varphi)$ durch und ermittelt für jede aktive Fahrerassistenzfunktion 3, 4 den Betriebsmodus A, B der den größten Korrelationskoeffizienten ergab. Im folgenden Schritt S 13 übermittelt der Koordinator 2 dem Sensor 1 für jede aktivierte Fahrerassistenzfunktion 3,4 den Betriebsmodus A, B für den der größte Korrelationskoeffizient r festgestellt wurde. Im darauffolgenden Schritt S14 kann es beispielhaft vorgesehen sein, dass der Sensor 1 für jede auf ihn zugreifende Assistenzfunktion 3, 4 den geeignetsten Betriebsmodus A, B abspeichert und die im jeweils abgeschalteten Betriebsmodus A, B gewonnenen Objektdaten $(d,\varphi)$ an den Koordinator 2 ausgibt, der diese Daten entsprechend dem gewählten Betriebsmodus A, B an die entsprechende Assistenzfunktion 3, 4 zur Auswertung weitergibt. Danach wird das Verfahren in Schritt S11 fortgesetzt, so dass erneut den aktiven Fahrerassistenzfunktionen 3, 4 die geeignetsten Betriebsmodi A, B zugeordnet werden.

Dieses Verfahren und diese Einrichtung haben den großen Vorteil, dass jederzeit neue Fahrerassistenzfunktionen aktiviert werden können und gegebenenfalls mehrere Detektionssensoren an den Koordinator 2 angeschlossen sein können. Je nach dem welche Objektdetektionssensoren 1 momentan aktiv sind bzw. welche Betriebsmodi aktiv sind, wird die Fahrerassistenzfunktion dem Betriebsmodus eines jeden möglichen Objektdetektionssensors 1 zugeordnet der hierfür am besten geeignet ist. Beispielweise kann es vorkommen, dass ein Videosensor oder ein Lidarsensor bei starkem Regen oder bei dichtem Nebel automatisch deaktiviert wird, da er keine verlässlichen Daten mehr liefern kann. In diesem Fall werden die von diesem Sensor abhängigen Fahrerassistenzfunktionen nicht mehr durch den Videosensor mit Objektdaten beliefert sondern von dem Betriebsmodus eines Objektdetektionssensors 1, der trotz der schlechten Sichtverhältnisse noch in Betrieb ist. Auch ist es möglich Fahrerassistenzsystemen jederzeit automatisch zu oder abzuschalten ohne dass hierfür eine neue Sensorkonfiguration benötigt wird.

**Patentansprüche**

1. Verfahren zur Steuerung mindestens eines Objektdetektionssensors (1) für ein Kraftfahrzeug, wobei der mindestens eine Sensor (1) zwischen mehreren Betriebsmodi (7,8) umschaltbar ist, wobei mehrere Fahrerassistenzfunktionen (3,4) zur Auswertung der mittels des Objektdetektionssensors (1) detektierten Objekte wahlfrei auf den mindestens einen Sensor (1) zugreifen können und eine Umschaltung zwischen den Betriebsmodi (7,8) in Abhängigkeit der momentan zugreifenden Fahrerassistenzfunktion (3,4) ausgewählt wird, **dadurch gekennzeichnet, dass** zwischen den Funktionsauswertungseinrichtungen (3,4) und dem mindestens einen Sensor (1) ein Koordinator (2) vorgesehen ist,

**dass** jede auf den mindestens einen Sensor (1) zugreifende Fahrerassistenzfunktion (3,4) dem Koordinator (2) jeweils eine Wichtigkeitsdichtefunktion ($w_i(d,\varphi)$) übermittelt, und

**dass** der mindestens eine Sensor (1) für jeden aktivierbaren Betriebsmodus (7,8) dem Koordinator (2) eine Detektionswahrscheinlichkeitsdichtefunktion ($v_i(d,\varphi)$) übermittelt, und der Koordinator (2) für jede auf den mindestens einen Sensor (1) zugreifende Fahrerassistenzfunktion (3,4) den geeignetsten Betriebsmodus (7,8) auswählt.

2. Verfahren nach Anspruch 1, **dadurch gekennzeichnet, dass** die Wichtigkeitsdichtefunktion ($w_i(d,\varphi)$) angibt, in welchem Teilbereich des Sensorerfassungsbereichs für die jeweilige Fahrerassistenzfunktion (3,4) besonders relevante Objekte auszuwerten sind, indem die Fahrerassistenzfunktion die Wichtigkeitsdichte in Abhängigkeit des Abstands (d) und/oder des Azimutwinkels ($\varphi$) des Sensorerfassungsbereichs angibt.

3. Verfahren nach Anspruch 1 oder 2, **dadurch gekennzeichnet, dass** die Detektionswahrscheinlichkeitsdichtefunktion ($v_i(d,\varphi)$) angibt, in welchem Teilbereich des Sensorerfassungsbereichs Objekte aufgrund des ausgewählten Betriebsmodusses (7,8) besonders gut detektierbar sind, indem die Fahrerassistenzfunktion (3,4) die Detektionswahrscheinlichkeitsdichte in Abhängigkeit des Abstands (d) und/oder des Azimutwinkels ($\varphi$) des Sensorerfassungsbereichs angibt.

4. Verfahren nach einem der vorhergehenden Ansprüche, **dadurch gekennzeichnet, dass** der mindestens eine Objektdetektionssensor (1) mehrere Sensoren sind, die in unterschiedlichen Sensorarten ausgeführt sind.

5. Verfahren nach Anspruch 4, **dadurch gekennzeichnet, dass** die unterschiedlichen Sensorarten Ultraschallsensoren, Pulsradarsensoren, frequenzmodulierte Dauerstrich (FMCW)-Radarsensoren, Lidarsensoren, und/oder Videosensoren sind.

6. Verfahren nach einem der vorhergehenden Ansprüche, **dadurch gekennzeichnet, dass** die mehreren Betriebsmodi (7,8) des mindestens einen Sensors (1) unterschiedliche Erfassungsbereiche und/oder unterschiedlichen Modulationsarten des Sensors und/oder unterschiedliche Auflösungsgenauigkeiten aufweisen.

7. Verfahren nach einem der vorhergehenden Ansprüche, **dadurch gekennzeichnet, dass** die mehreren Fahrerassistenzfunktionen (3,4)

- eine adaptive Abstands- und Geschwindigkeitsregelfunktion für ausgebaute Landstraßen und Autobahnen (LR-ACC) und/oder
- eine stop&go-fähige, adaptive Abstands- und Geschwindigkeitsregelfunktion für den Stadtverkehr (SR-ACC) und/oder.
- eine automatisch auslösende Notbremsfunktion (NBF) und/oder
- eine Funktion, die eine Kollisionssituadon erkennt und den Fahrer warnt oder die Auslöseschwelle eines Bremsassistenten verändert und/oder
- eine Spurhaltefunktion (LKS) und/oder
- eine Spurverlassenswarnungsfunktion (LDW), und/oder
- eine Einparkhilfe (EPH)

sind.

8. Verfahren nach einem der vorhergehenden Ansprüche, **dadurch gekennzeichnet, dass** der Koordinator (2) die mittels des wenigstens einen Sensors (1) gewonnenen Objektdaten ($d,\varphi$) der Fahrerassistenzfunktion (3,4) zur Auswertung zuführt, in deren Abhängigkeit der entsprechende Betriebsmodus (7,8) gewählt wurde.

9. Verfahren nach einem der vorhergehenden Ansprüche, **dadurch gekennzeichnet, dass** die Auswahl des zu aktivierenden Betriebsmoduses (7,8) des wenigstens einen Sensors (1) durch den Koordinator (2) durch Korrelation aus der Wichtigkeitsdichtefunktion ($w_i(d,\varphi)$ ) mit der Detektionswahrscheinlichkeitsdichtefunktion ($v_i(d,\varphi)$) erfolgt.

10. Verfahren nach einem der vorhergehenden Ansprüche, **dadurch gekennzeichnet, dass** zusätzliche Fahrerassistenzfunktionen aktivierbar sind und neben den aktiven Funktionen auf den wenigstens einen Sensor (1) zugreifen können, ohne den Koordinator (2) und/oder den Sensor (1) bezüglich der zusätzlichen Fahrerassistenzfunktion neu konfigurieren zu müssen.

11. Vorrichtung zur Steuerung mindestens eines Objektdetektionssensors (1) für ein Kraftfahrzeug, wobei der mindestens eine Sensor (1) zwischen mehreren Betriebsmodi (7,8) umschaltbar ist, wobei mehrere Fahrerassistenzfunktionen (3,4) zur Auswertung der mittels des Objektdetektionssensors (1) detektierten Objekte wahlfrei auf den mindestens einen Sensor (L) zugreifen können und eine Umschaltung zwischen den Betriebsmodi (7,8) in Abhängigkeit der momentan zugreifenden Fahrerassistenzfunktion (3,4) ausgewählt wird, **dadurch gekennzeichnet, dass** zwischen den Funktionenauswertungseinrichtungen (3,4) und dem mindestens einen Sensor (1) ein Koordinator (2) vorgesehen ist,

**dass** jede auf den mindestens einen Sensor (1) zugreifende Fahrerassistenzfunktion (3,4) dem Koordinator (2) jeweils eine Wichtigkeitsdichtefunktion ($w_i(d,\varphi)$) übermittelt, und

**dass** der mindestens eine Sensor (1) für jeden aktivierbaren Betriebsmodus (7,8) dem Koordinator (2) eine Detektionswahrscheinlichkeitsdichtefunktion ($v_i(d,\varphi]$) übermittelt, und der Koordinator (2) für jede auf den mindestens einen Sensor (1) zugreifende Fahrerassistenzfunktion (3,4) den geeignetsten Betriebsmodus (7,8) auswählt.

12. Vorrichtung nach Anspruch 11, **dadurch gekennzeichnet, dass** im Koordinator (2) eine Einrichtung zur Korrelationsauswertung vorgesehen ist.

## Claims

1. Method for controlling at least one object detection sensor (1) for a motor vehicle, wherein the at least one sensor (1) can be switched over between a plurality of operating modes (7, 8), wherein a plurality of driver assistance functions (3, 4) for evaluating the objects which are detected by means of the object detection sensor (1) can randomly access the at least one sensor (1), and switching over between the operating modes (7, 8) is selected as a function of the driver assistance function (3, 4) which is accessing at a particular time, **characterized in that** a coordinator (2) is provided between the function evaluation devices (3, 4) and the at least one sensor (1), **in that** each driver assistance function (3, 4) which accesses the at least one sensor (1) transmits in each case a weighting density function ($w_i(d, \varphi)$) to the coordinator, and in that the at least one sensor (1) transmits a detection probability density function ($v_i(d, \varphi)$) to the coordinator (2) for each operating mode (7, 8) which can be activated, and the coordinator (2) selects the most suitable operating mode (7, 8) for each driver assistance function (3, 4) which accesses the at least one sensor (1).

2. Method according to Claim 1, **characterized in that** the weighting density function ($w_i(d, \varphi)$) specifies the part of the sensor-sensing region in which objects which are particularly relevant for the respective driver assistance function (3, 4) are to be evaluated **in that** the driver assistance function specifies the weighting density as a function of the distance (d) and/or the azimuth angle ($\varphi$) of the sensor-sensing region.

3. Method according to Claim 1 or 2, **characterized in that** the detection probability density function ($v_i(d, \varphi)$) specifies the part of the sensor-sensing region in which objects can be particularly well detected on the basis of the selected operating mode (7, 8) **in that** the driver assistance function (3, 4) specifies the detection probability density as a function of the distance (d) and/or the azimuth angle ($\varphi$) of the sensor-sensing region.

4. Method according to one of the preceding claims, **characterized in that** the at least one object detection sensor (1) comprises a plurality of sensors which are embodied as different types of sensor.

5. Method according to Claim 4, **characterized in that** the different types of sensor are ultrasonic sensors, pulse radar sensors, frequency-modulated continuous wave (FMCW) radar sensors, Lidar sensors and/or video sensors.

6. Method according to one of the preceding claims, **characterized in that** the plurality of operating modes (7, 8) of the at least one sensor (1) have different sensing regions and/or different types of modulation of the sensor and/or different resolution accuracy levels.

7. Method according to one of the preceding claims, **characterized in that** the plurality of driver assistance functions (3, 4) are

  - an adaptive distance and speed control function for upgraded highways and motorways (LR-ACC) and/or
  - a stop & go-enabled, adaptive distance and speed control function for urban traffic (SR-ACC) and/or
  - an automatically triggered emergency braking function (NBF) and/or
  - a function which detects a collision situation and warns the driver or changes the triggering threshold of a braking assistance and/or
- a lane keeping function (LKS) and/or
- a lane departure warning function (LDW), and/or
- a parking assistant (EPH).

8. Method according to one of the preceding claims, **characterized in that** the object data (d, φ), which have been acquired by means of the at least one sensor (1) and as a function of which the corresponding operating mode (7, 8) has been selected, are fed by the coordinator (2) to the driver assistance function (3, 4) for evaluation.

9. Method according to one of the preceding claims, **characterized in that** the operating mode (7, 8) to be activated, of the at least one sensor (1) is selected by means of the coordinator (2) through correlation of the weighting density function ($w_i(d, \varphi)$) with the detection probability density function ($v_i(d, \varphi)$) .

10. Method according to one of the preceding claims, **characterized in that** additional driver assistance functions can be activated and can access the at least one sensor (1), in addition to the active functions, without the coordinator (2) and/or the sensor (1) having to be re-configured for the additional driver assistance function.

11. Device for controlling at least one object detection sensor (1) for a motor vehicle, wherein the at least one sensor (1) can be switched over between a plurality of operating modes (7, 8), wherein a plurality of driver assistance functions (3, 4) for evaluating the objects which are detected by means of the object detection sensor (1) can randomly access the at least one sensor (1), and switching over between the operating modes (7, 8) is selected as a function of the driver assistance function (3, 4) which is accessing at a particular time, **characterized in that** a coordinator (2) is provided between the function evaluation devices (3, 4) and the at least one sensor (1) , **in that** each driver assistance function (3, 4) which accesses the at least one sensor (1) transmits in each case a weighting density function ($w_i(d, \varphi)$) to the coordinator, and in that the at least one sensor (1) transmits a detection probability density function ($v_i(d, \varphi)$) to the coordinator (2) for each operating mode (7, 8) which can be activated, and the coordinator (2) selects the most suitable operating mode (7, 8) for each driver assistance function (3, 4) which accesses the at least one sensor (1).

12. Device according to Claim 11, **characterized in that** a correlation-evaluating apparatus is provided in the coordinator (2).

**Revendications**

1. Procédé pour commander au moins un capteur de détection d'objet (1) pour un véhicule automobile, l'au moins un capteur (1) pouvant être permuté entre plusieurs modes de fonctionnement (7, 8), plusieurs fonctions d'assistance au conducteur (3, 4) destinées à interpréter les objets détectés au moyen du capteur de détection d'objet (1) pouvant accéder sans sélection à l'au moins un capteur (1) et une permutation entre les modes de fonctionnement (7, 8) étant sélectionnée en fonction de la fonction d'assistance au conducteur (3, 4) qui est momentanément en cours d'accès, **caractérisé en ce qu'**un coordinateur (2) est prévu entre les dispositifs d'interprétation de fonction (3, 4) et l'au moins un capteur (1), que chaque fonction d'assistance au conducteur (3, 4) qui accède à l'au moins un capteur (1) communique au coordinateur (2) à chaque fois une fonction de densité d'importance ($w_i (d, \varphi)$ ) et que l'au moins un capteur (1), pour chaque mode de fonctionnement (7, 8) pouvant être activé, communique au coordinateur (2) une fonction de densité de probabilité de détection ($v_i(d, \varphi)$) et le coordinateur (2) sélectionne le mode de fonctionnement le plus approprié (7, 8) pour chaque fonction d'assistance au conducteur (3, 4) qui accède à l'au moins un capteur (1).

2. Procédé selon la revendication 1, **caractérisé en ce que** la fonction de densité d'importance ($w_i(d, \varphi)$ ) indique la zone partielle de la zone de détection du capteur dans laquelle il faut interpréter les objets particulièrement pertinents pour la fonction d'assistance au conducteur (3, 4) correspondante **en ce que** la fonction d'assistance au conducteur indique la densité d'importance en fonction de la distance (d) et/ou de l'angle d'azimut (φ) de la zone de détection du capteur.

3. Procédé selon la revendication 1 ou 2, **caractérisé en ce que** la fonction de densité de probabilité de détection ($v_i(d, \varphi)$) indique la zone partielle de la zone de détection du capteur dans laquelle la détection des objets, du fait du mode de fonctionnement (7, 8) sélectionné, est particulièrement efficace **en ce que** la fonction d'assistance au conducteur (3, 4) indique la densité de probabilité de détection en fonction de la distance (d) et/ou de l'angle d'azimut

(φ) de la zone de détection du capteur.

4. Procédé selon l'une des revendications précédentes, **caractérisé en ce que** l'au moins un capteur de détection d'objet (1) est constitué de plusieurs capteurs qui sont réalisés selon différents types de capteurs.

5. Procédé selon la revendication 4, **caractérisé en ce que** les différents types de capteurs sont des capteurs à ultrasons, des capteurs à radar pulsé, des capteurs radar à onde entretenue modulés en fréquence (FMCW), des capteurs à lidar et/ou des capteurs vidéo.

6. Procédé selon l'une des revendications précédentes, **caractérisé en ce que** lesdits plusieurs modes de fonctionnement (7, 8) de l'au moins un capteur (1) présentent des zones de détection différentes et/ou des modes de modulation différents du capteur et/ou des précisions de résolution différentes.

7. Procédé selon l'une des revendications précédentes, **caractérisé en ce que** lesdites plusieurs fonctions d'assistance au conducteur (3, 4) sont

   - une fonction de régulation adaptative de la distance et de la vitesse pour les routes nationales et les autoroutes aménagées (LR-ACC) et/ou
   - une fonction de régulation adaptative de la distance et de la vitesse compatible stop&go pour la circulation en ville (SR-ACC) et/ou
   - une fonction de freinage de secours (NBF) à déclenchement automatique et/ou
   - une fonction qui détecte une situation de collision et qui avertit le conducteur ou qui modifie le seuil de déclenchement d'un assistant au freinage et/ou
   - une fonction de maintien de la trajectoire (LKS) et/ou
   - une fonction d'alerte sur déviation de la trajectoire (LDW) et/ou
   - une aide au stationnement (EPH).

8. Procédé selon l'une des revendications précédentes, **caractérisé en ce que** le coordinateur (2) achemine pour interprétation les données d'objet (d, φ) acquises au moyen de l'au moins un capteur (1) à la fonction d'assistance au conducteur (3, 4) en fonction de laquelle a été sélectionné le mode de fonctionnement (7, 8) correspondant.

9. Procédé selon l'une des revendications précédentes, **caractérisé en ce que** la sélection du mode de fonctionnement (7, 8) à activer de l'au moins un capteur (1) est réalisée par le coordinateur (2) par corrélation de la fonction de densité d'importance ($w_i(d, φ)$) avec la fonction de densité de probabilité de détection ($v_i(d, φ)$).

10. Procédé selon l'une des revendications précédentes, **caractérisé en ce que** des fonctions d'assistance au conducteur supplémentaires peuvent être activées et peuvent accéder à l'au moins un capteur (1) en plus des fonctions actives sans qu'il soit nécessaire de reconfigurer le coordinateur (2) et/ou le capteur (1) au sujet des fonctions d'assistance au conducteur supplémentaires.

11. Dispositif pour commander au moins un capteur de détection d'objet (1) pour un véhicule automobile, l'au moins un capteur (1) pouvant être permuté entre plusieurs modes de fonctionnement (7, 8), plusieurs fonctions d'assistance au conducteur (3, 4) destinées à interpréter les objets détectés au moyen du capteur de détection d'objet (1) pouvant accéder sans sélection à l'au moins un capteur (1) et une permutation entre les modes de fonctionnement (7, 8) étant sélectionnée en fonction de la fonction d'assistance au conducteur (3, 4) qui est momentanément en cours d'accès, **caractérisé en ce qu'**un coordinateur (2) est prévu entre les dispositifs d'interprétation de fonction (3, 4) et l'au moins un détecteur (1), que chaque fonction d'assistance au conducteur (3, 4) qui accède à l'au moins un capteur (1) communique au coordinateur (2) à chaque fois une fonction de densité d'importance ($w_i(d, φ)$) et que l'au moins un capteur (1), pour chaque mode de fonctionnement (7, 8) pouvant être activé, communique au coordinateur (2) une fonction de densité de probabilité de détection ($v_i(d, φ)$) et le coordinateur (2) sélectionne le mode de fonctionnement le plus approprié (7, 8) pour chaque fonction d'assistance au conducteur (3, 4) qui accès à l'au moins un capteur (1).

12. Dispositif selon la revendication 11, **caractérisé en ce qu'**un dispositif d'interprétation de la corrélation est prévu dans le coordinateur (2).

Fig. 1

Fig. 2

Fig. 3a

Fig. 3b

S9 — ( Start )

S10 — [ ]

S11 — [ ]

S12 — [ ]

S13 — [ ]

S14 — [ ]

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19934670 A1
- DE 10147443 A1